# FASCICULE DE BREVET EUROPEEN

(11) **EP 1 692 427 B1**
(45) Date de publication et mention de la délivrance du brevet: **11.07.2012**
(21) Numéro de dépôt: 04805511.5
(22) Date de dépôt: 23.11.2004
(51) Int. Cl.: F16L 37/12, F16L 37/098

(54) **DISPOSITIF DE RACCORDEMENT INSTANTANE**
SCHNELLVERBINDUNGSVORRICHTUNG
QUICK COUPLING DEVICE

(30) Priorité: 10.12.2003 FR 0314458
(43) Date de publication de la demande: 23.08.2006
(73) Titulaire: LEGRIS SA, 35000 Rennes (FR)
(72) Inventeur: PODER, Philippe, F-35580 GUICHEN (FR)
(74) Mandataire: Lavialle, Bruno François Stéphane
(86) Numéro de dépôt international: PCT/FR2004/002982
(87) Numéro de publication internationale: WO 2005/066534

(56) Documents cités:
- DE-C- 182 231
- FR-A- 1 237 982
- US-A- 5 029 904
- US-A- 5 226 680

## Description

La présente invention concerne un dispositif de raccordement instantané utilisable par exemple dans un circuit de transport d'un fluide tel que de l'air.

### ARRIERE PLAN DE L'INVENTION

Il existe des dispositifs de raccordement instantané, tels US 5 029 904 comprenant un corps axialement divisé en une section de liaison à un premier conduit et une section de connexion agencée pour recevoir de façon étanche une extrémité d'un deuxième conduit. Le corps est associé à un organe de retenue possédant des pattes élastiquement déformables entre un état d'agrippement d'un redan externe de l'extrémité du deuxième conduit et un état d'échappement du redan. Les pattes sont réalisées en une seule pièce avec le corps. Il est connu de monter sur le corps une bague de verrouillage qui peut pivoter ou coulisser entre une position dans laquelle la bague laisse les pattes libres de se déformer entre leurs deux états et une position dans laquelle la bague maintient les pattes dans leur état d'agrippement.

Pour que les pattes puissent se déformer, il est nécessaire que le corps soit réalisé en un matériau relativement élastique. Le corps, qui est la pièce principale du dispositif de raccordement, est alors susceptible de subir des déformations qui peuvent altérer la qualité du raccordement en particulier en ce qui concerne la fermeté de la retenue du deuxième conduit et l'étanchéité du raccordement. Le choix du matériau du corps résulte alors d'un délicat compromis entre la nécessaire rigidité de cette pièce de structure et l'élasticité suffisante pour permettre un effort de connexion modéré.

### OBJET DE L'INVENTION

Il serait donc intéressant de disposer d'un dispositif de raccordement instantané présentant des performances améliorées par rapport aux dispositifs de raccordement connus.

### BREVE DESCRIPTION DE L'INVENTION

A cet effet, on prévoit, selon l'invention, un dispositif de raccordement instantané comprenant un corps axialement divisé en une section de liaison à un premier conduit et une section de connexion agencée pour recevoir de façon étanche une extrémité d'un deuxième conduit, le corps étant associé à un organe de retenue possédant des pattes élastiquement déformables entre un état d'agrippement d'un redan externe de l'extrémité du deuxième conduit et un état d'échappement du redan, l'organe de retenue étant monté sur le corps pour pivoter entre une position de libre déformation des pattes entre leurs deux états, et au moins une position de maintien dans laquelle les pattes coopèrent avec une surface qui est solidaire du corps et qui maintient les pattes dans l'un de leurs deux états.

Ainsi, le corps peut être réalisé en un matériau rigide tandis que l'organe de retenue peut être réalisé dans un matériau plus élastique. Cette structure est en outre particulièrement simple de fabrication.

Selon une première réalisation, dans la position de maintien, chaque patte dans son état d'agrippement est au moins partiellement reçue dans un logement du corps dont une surface s'oppose à une déformation de la patte vers son état d'échappement.

Le pivotement de l'organe de retenue sur le corps permet alors de verrouiller la retenue du deuxième conduit en maintenant les pattes dans leur état d'agrippement. Le verrouillage de la connexion peut être contrôlé visuellement en vérifiant l'escamotage des pattes dans les logements.

Selon une deuxième réalisation, dans la position de maintien, chaque patte coopère avec une rampe du corps soulevant la patte pour amener celle-ci dans son état d'échappement.

Ainsi, lorsque l'organe de retenue est amené dans sa position de maintien, le corps fournit une assistance à la déconnexion en amenant les pattes dans leur état d'échappement. La déconnexion ne nécessite alors pas d'outillage spécifique.

De préférence alors, dans la position de libre déformation, l'organe de retenue est agencé pour pouvoir être entraîné axialement par le deuxième conduit vers une position de verrouillage dans laquelle chaque patte dans son état d'agrippement est au moins partiellement reçue dans un logement du corps dont une surface s'oppose à une déformation de la patte vers son état d'échappement.

A la mise sous pression du circuit dans lequel est implanté le dispositif de raccordement, le deuxième conduit recule et entraîne l'organe de retenue dans la position de verrouillage. Le raccordement est ainsi verrouillé automatiquement lors de la mise sous pression du circuit.

Selon une troisième réalisation combinant les deux réalisations précédentes, l'organe de retenue possède deux positions de maintien décalées angulairement l'une par rapport à l'autre, de préférence de part et d'autre de la position de libre déformation.

L'organe de retenue peut alors être amené depuis sa position de libre déformation soit dans sa position de verrouillage de la connexion, soit dans sa position de déconnexion.

Avantageusement, le corps comprend une surface radiale de butée destinée à coopérer avec une face radiale frontale de l'extrémité libre des pattes lorsque celles-ci sont soumises à un effort de traction.

Ainsi, l'effort de traction qui est exercé sur les pattes est repris par le corps de sorte que l'effort est réparti, ce qui permet de limiter les sollicitations en fatigue, et les pattes sont amenées à travailler essentiellement en cisaillement.

Avantageusement encore, le dispositif comprend un moyen d'indexation de l'organe de retenue par rapport au corps au moins pour la position de libre déformation de l'organe de retenue et, de préférence, le moyen d'indexation comporte au moins une lamelle flexible s'étendant axialement depuis l'organe de retenue ou le corps pour coopérer avec un ergot radialement en saillie du corps ou de l'organe de retenue.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- les figures 1 à 3 sont des vues en perspective illustrant les phases de connexion instantanée et de verrouillage de la connexion d'un conduit dans un dispositif de raccordement conforme à un premier mode de réalisation de l'invention,
- la figure 4 est une vue analogue à la figure 1 illustrant la déconnexion du conduit,
- la figure 5 est une vue en perspective et en coupe longitudinale selon le plan V de la figure 4,
- la figure 6 est une vue partielle en perspective et en éclaté du dispositif de raccordement conforme au premier mode de réalisation
- la figure 7 est une vue en coupe longitudinale un dispositif de raccordement conforme à un deuxième mode de réalisation de l'invention, avec un conduit raccordé,
- la figure 8 est une vue analogue à celle de la figure 7, lorsque est sous pression le circuit dans lequel est implanté le dispositif de raccordement conforme au deuxième mode de réalisation,
- la figure 9 est une vue en perspective de ce dispositif de raccordement.

### DESCRIPTION DETAILLEE DE L'INVENTION

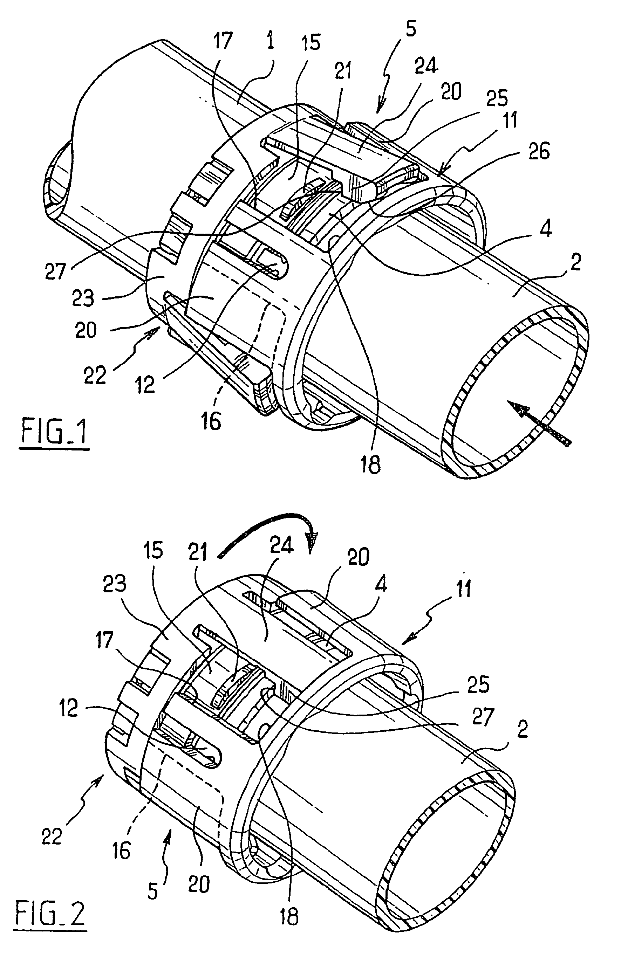

En référence aux figures 1 à 6, le dispositif de raccordement instantané conforme au premier mode de réalisation de l'invention est destiné à permettre le raccordement d'un premier conduit 1 (visible uniquement sur la figure 1) à un deuxième conduit 2. Le conduit 2 a une extrémité 3 pourvue extérieurement d'un redan annulaire 4. Les conduits 1 et 2 sont par exemple des canalisations d'un circuit de transport d'un fluide, tel que de l'air, ou sont solidaire pour l'un d'un organe émetteur de fluide, tel qu'une pompe, et pour l'autre d'un organe récepteur de fluide, tel qu'un réservoir ou une turbine. Les conduits 1 et 2 sont ici des conduits en matériau thermoplastique.

Le dispositif de raccordement instantané comprend un corps généralement désigné en 5 qui est divisé en une section de liaison 6 au conduit 1 et en une section de connexion 7 agencée pour recevoir l'extrémité 3 du conduit 2.

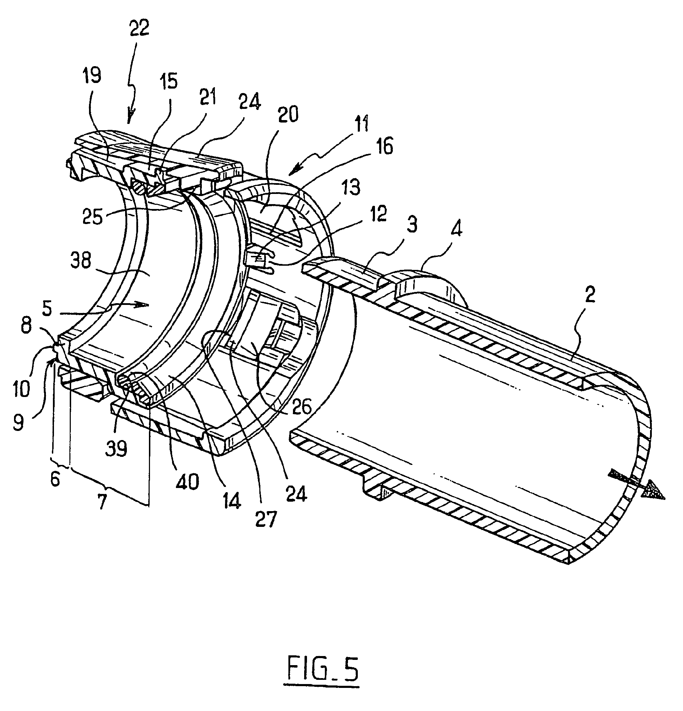

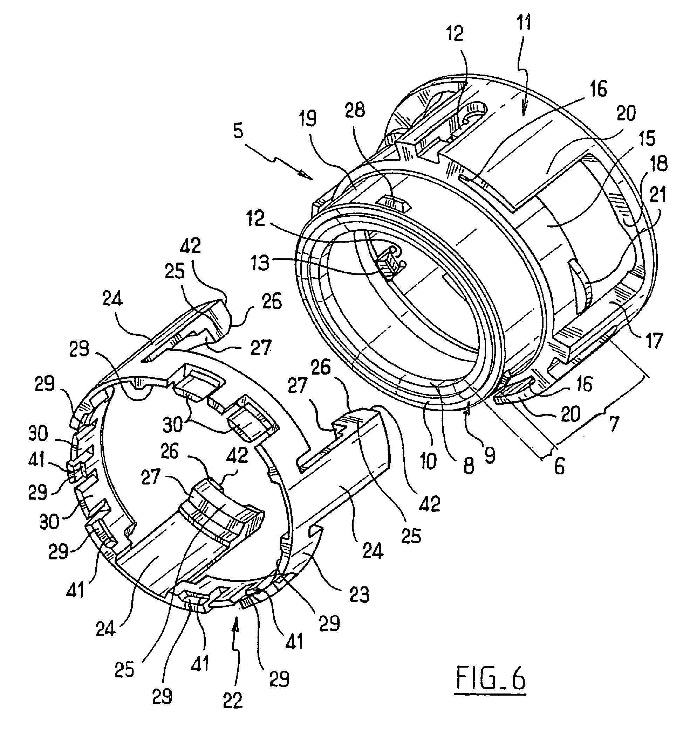

La section de liaison 6 comprend ici une bague 8 présentant, à l'opposé de la section de connexion 7, une face d'extrémité 9 en saillie axiale de laquelle s'étend un collet 10 (visibles en particulier aux figures 5 et 6). La section de liaison 6 est ici destinée à être soudée par friction sur la face frontale du conduit 1 (la fusion du collet 10 assurant la soudure). La section de liaison 6 peut également être fixée sur l'extrémité du conduit 1 par tout autre mode de fixation, par une soudure thermique ou ultrasons, ou encore par collage. La section de liaison 6 peut en outre comprendre un embout mâle destiné à être introduit dans le conduit 1 ou une partie femelle destinée à recevoir l'extrémité du conduit 1 et pourvue de moyens pour assujettir le conduit 1 au corps 5 de façon étanche et démontable ou indémontable.

La section de connexion 7 comprend un logement cylindrique 38 ayant un diamètre légèrement supérieur au diamètre externe de l'extrémité 3 du conduit 2 pour assurer un guidage de celle-ci. A l'opposé de la section de liaison 6, le logement 38 possède une extrémité dans laquelle est ménagé un lamage 39 recevant un joint d'étanchéité 40 de forme annulaire ayant un diamètre interne inférieur au diamètre externe de l'extrémité 3 du conduit 2. Le joint d'étanchéité 40 est maintenu en position dans le lamage 39 par l'intermédiaire d'un insert annulaire 14 engagé dans le lamage 39 à l'opposé du logement 38.

La section de connexion 7 est surmontée d'une couronne, généralement désignée en 11, qui s'étend au-delà de la section de connexion 7 à l'opposé de la section de liaison 6. La couronne 11 est en une seule pièce avec la section de connexion 7 et possède, pour sa partie en saillie de la section de connexion 7, un diamètre interne supérieur au diamètre externe du redan annulaire 4 de l'extrémité 3 du conduit 2.

Dans la couronne 11 sont délimitées des languettes 12 qui s'étendent axialement et qui possèdent une extrémité libre pourvue d'un redan 13 (visible figures 5 et 6) en saillie vers l'intérieur de la couronne 11. Le redan 13 comprend du côté de l'extrémité libre de la couronne 11 une facette inclinée et du côté opposé une facette radiale. Les languettes 12 sont élastiquement déformables entre un état de repos dans lequel le redan 13 s'étend en saillie vers l'intérieur de la couronne 11 et un état de déformation dans lequel le redan 13 est escamoté. Les languettes 12 assurent le maintien de l'insert annulaire 14 dans le lamage 39. Lors de l'introduction de l'insert annulaire 14 dans la couronne 11, l'insert annulaire 14 a glissé sur les facettes inclinées des redans 13 et a ainsi progressivement amené les languettes 12 dans leur état de déformation. Une fois l'insert annulaire 14 dans le lamage 39, l'insert annulaire 14 n'est plus en contact avec les redans 13, de sorte que les languettes 12 reviennent élastiquement dans leur état de repos dans lequel la facette radiale des redans 13 forme une butée pour l'insert annulaire 14 (voir la figure 5).

Des renfoncements 15 sont ménagés extérieurement dans la couronne 11 à 120° les uns des autres. Ces renfoncements 15 sont délimités par deux bords latéraux 16, 17 s'étendant parallèlement à l'axe du dispositif de raccordement et par un bord transversal 18 s'étendant perpendiculairement à l'axe du dispositif de raccordement du côté de l'extrémité libre de la couronne 11. Chaque renfoncement 15 débouche à l'opposé du bord transversal 18 sur une portée cylindrique 19 (visible figure 5 et 6) qui sera détaillée ci-après.

Une aile 20 s'étend depuis le bord latéral 16 et le bord transversal 18 pour recouvrir un tiers du renfoncement 15.

Au voisinage du bord latéral 17 de chaque renfoncement 15, une rampe 21 s'étend selon une direction circonférentielle du corps 5 en saillie radiale externe dans le renfoncement 15.

Le dispositif de raccordement comprend un organe de retenue, généralement désigné en 22, comportant un manchon 23 ayant une extrémité depuis laquelle s'étendent axialement en saillie des pattes 24 ayant chacune une extrémité libre pourvue d'un redan 25 en saillie vers l'intérieur. Le redan 25 présente une surface biseautée 26 à l'opposé du manchon 23 et une surface radiale 27 du côté du manchon. Les pattes 24 sont élastiquement déformables entre un état d'agrippement dans lequel les redans 25 définissent une section de passage ayant un diamètre inférieur au diamètre externe du redan annulaire 4 de l'extrémité 3 du conduit 2 et un état d'échappement dans lequel les redans 25 sont écartés les uns des autres de manière à définir une section de passage ayant un diamètre au moins égal au diamètre externe du redan annulaire 4.

Le manchon 23 est enfilé sur la portée cylindrique 19 de telle manière que chaque patte 24 pénètre dans un renfoncement 15 du côté ouvert de celui-ci. Les pattes 24 ont ici une largeur égale à environ un tiers de la largeur des renfoncements 15.

Le manchon 23 est monté pour pivoter sur la portée cylindrique 19 entre trois positions angulaires de l'organe de retenue 22.

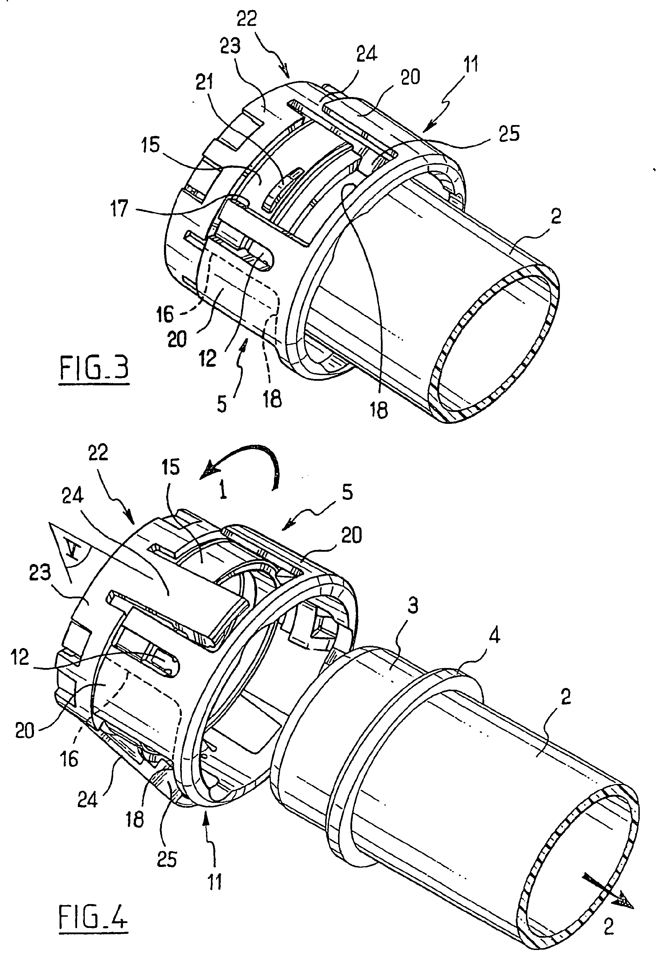

Dans une première position extrême ou position de verrouillage (figure 3), chaque patte 24 est dans son état d'agrippement et s'étend au voisinage du bord latéral 16 de telle manière que l'aile 20 recouvre au moins partiellement la patte 24 et maintient la patte 24 dans son état d'agrippement. On notera que la réalisation des pattes dans une couleur ou un ton différent de celle ou celui du corps permettrait de s'assurer visuellement du verrouillage.

Dans une deuxième position extrême ou position de déverrouillage (figure 4), chaque patte 24 est soulevée par la rampe 21 qui maintient la patte 24 dans son état d'échappement.

Dans une position intermédiaire entre ces deux positions extrêmes, dite position de connexion instantanée (figure 1), la patte 24 est dégagée de l'aile 20 et de la rampe 21 de sorte qu'elle est libre de se déformer entre ses deux états.

Le dispositif de raccordement comprend en outre un moyen d'indexation de l'organe de retenue dans ses trois positions. Le moyen d'indexation comprend trois ergots 28 qui s'étendent à 120° les uns des autres en saillie de la portée cylindrique 19 et le manchon 23 comporte, du côté de son extrémité opposée aux pattes 24, trois logements internes 29 qui sont divisés chacun en trois compartiments par deux lamelles élastiques 30 découpées axialement dans le manchon de manière espacée l'une de l'autre. Le passage de l'ergot 28 d'un compartiment du logement interne 29 au compartiment adjacent suppose de déformer la lamelle élastique 30 s'étendant entre ceux-ci. Les lamelles élastiques 30 assurent le maintien de l'ergot 28 dans le compartiment dans lequel il est reçu mais présente des bords biseautés formant des cames d'effacement des lamelles élastiques pour permettre le passage de l'ergot d'un compartiment à un autre en constituant un point dur dans la rotation du manchon. L'ergot 28 assure également le maintien axial du manchon 23 sur la portée cylindrique 19. Les logements internes 29 présentent des surfaces radiales d'épaulement 41 qui coopèrent avec les ergots 28 pour s'opposer au retrait de l'organe de retenue 22 en assurant un clipsage de celui-ci sur le corps.

Pour effectuer la connexion, le conduit 2 est introduit dans le dispositif de raccordement instantané alors que l'organe de retenue 22 est dans sa position de connexion instantanée. Lors de l'introduction du conduit 2 le redan annulaire 4 rencontre la surface biseauté 26 qui glisse sur le redan annulaire 4 et provoque la déformation des pattes 24 de leur état d'agrippement à leur état d'échappement. Une fois le redan annulaire 4 passé, les pattes 24 reviennent dans leur état d'agrippement et la face radiale 27 vient s'opposer à un mouvement d'extraction du conduit 2 hors du dispositif de raccordement.

Pour verrouiller la connexion, l'organe de retenue est pivoté pour amener les pattes 24 sous les ailes 20 de manière que celles-ci s'opposent à une déformation des pattes 24 vers leur état d'échappement (voir la figure 2). L'organe de retenue est alors dans sa position de verrouillage (voir la figure 3).

On notera que dans cette position les pattes 24 présentent une face frontale 42, radiale et attenante au bord transversal 18 de sorte qu'un effort de traction exercé sur les pattes 24 par le conduit 2 met la face frontale 42 en contact avec le bord transversal 18 qui reprend l'effort de traction.

La déconnexion est réalisée en faisant pivoter l'organe de retenue 22 vers sa position de déverrouillage (voir la figure 4 et la figure 5). Lors de cette rotation, les pattes 24 vont glisser sur les rampes 21 qui vont provoquer un soulèvement des pattes 24 déformant celles-ci dans leur état d'échappement. Le conduit 2 peut alors être extrait du dispositif de raccordement.

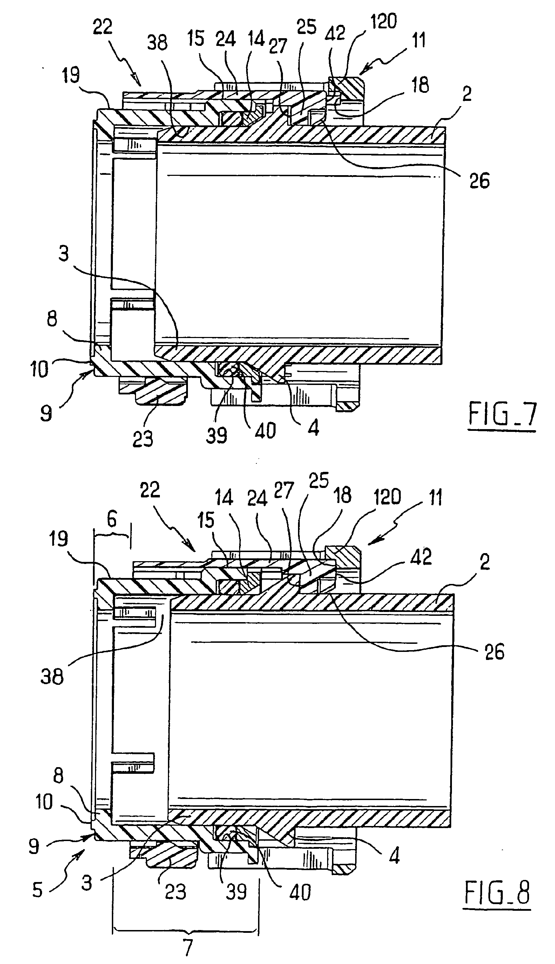

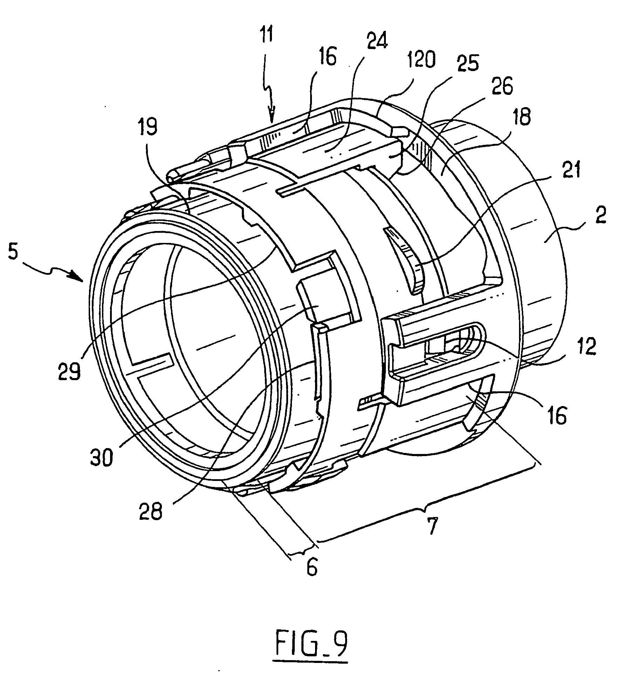

Les éléments identiques ou analogues à ceux précédemment décrits porteront une référence numérique identique dans la description qui suit du deuxième mode de réalisation en référence aux figures 7 à 9.

Le dispositif de raccordement conforme au deuxième mode de réalisation comporte un corps 5 et un organe de retenue 22.

Le corps 5 comprend comme dans le premier mode de réalisation une section de liaison 6 et une section de connexion 7.

La section de connexion 7 est surmontée d'une couronne 11 dans laquelle sont ménagés des renfoncements 15 délimités par deux bords latéraux 16, 17 s'étendant parallèlement à l'axe du dispositif de raccordement et par un bord transversal 18 s'étendant perpendiculairement à l'axe du dispositif de raccordement du côté de l'extrémité libre de la couronne 11. Chaque renfoncement 15 débouche à l'opposé du bord transversal 18 sur une portée cylindrique 19.

Une aile 120 s'étend dans le renfoncement 15 depuis le bord latéral 16 et le bord transversal 18.

Au voisinage du bord latéral 17 de chaque renfoncement 15, une rampe 21 s'étend selon une direction circonférentielle du corps 5 en saillie radiale externe dans le renfoncement 15.

L'organe de retenue 22 comprend comme dans le premier mode de réalisation un manchon 23 et des pattes 24.

Le manchon 23 est ici monté sur la portée cylindrique 19 pour pivoter entre deux positions angulaires de l'organe de retenue 22.

Dans une première position extrême dite position de connexion instantanée (figure 7), la patte 24 s'étend au voisinage du bord latéral 16 tout en étant dégagée de l'aile 120 de sorte qu'elle est libre de se déformer entre ses deux états.

Dans une deuxième position extrême ou position de déverrouillage, chaque patte 24 est soulevée par la rampe 21 qui maintient la patte 24 dans son état d'échappement.

L'indexation de l'organe de retenue dans ses deux positions est réalisée de façon analogue au premier mode de réalisation au moyen d'ergots 28 en saillie de la portée cylindrique 19 pour être reçus dans des logements internes 29 du manchon 23. Les logements 29 sont ici toutefois divisés chacun en seulement deux compartiments par une seule lamelle élastique 30.

Le manchon 23 est également monté sur la portée cylindrique 19 pour coulisser axialement de sa position de libre déformation vers une position de verrouillage (figure 8) dans laquelle chaque patte 24 dans son état d'agrippement a son extrémité libre s'étendant sous l'aile 120 qui maintient la patte 24 dans son état d'agrippement.

La connexion est réalisé en introduisant le conduit 2 dans le dispositif de raccordement instantané alors que l'organe de retenue 22 est dans sa position de connexion instantanée. Le redan annulaire 4 rencontre la surface biseauté 26 et provoque la déformation des pattes 24 de leur état d'agrippement à leur état d'échappement. Une fois le redan annulaire 4 passé, les pattes 24 reviennent dans leur état d'agrippement et la face radiale 27 vient s'opposer à un mouvement d'extraction du conduit 2 hors du dispositif de raccordement (voir la figure 7).

Lors de la mise sous pression du circuit, le tube 2 recule et entraîne l'organe de retenue dans sa position de verrouillage amenant l'extrémité libre 25 des pattes 24 sous les ailes 120 de manière que celles-ci s'opposent à une déformation des pattes 24 vers leur état d'échappement (voir la figure 8).

On notera que dans cette position la face frontale 42 des pattes 24 est en contact avec le bord transversal 18 qui reprend l'effort de traction.

La déconnexion est réalisée en faisant pivoter l'organe de retenue 22 vers sa position de déverrouillage. Lors de cette rotation, les pattes 24 vont glisser sur les rampes 21 qui vont provoquer un soulèvement des pattes 24 déformant celles-ci dans leur état d'échappement. Le conduit 2 peut alors être extrait du dispositif de raccordement.

Bien entendu, l'invention n'est pas limitée au mode de réalisation décrit et on peut y apporter des variantes de réalisation sans sortir du cadre de l'invention tel que défini par les revendications.

En particulier, l'organe de retenue peut avoir une structure différente de celle décrite et comprendre par exemple un nombre différent de pattes élastiquement déformables.

Par ailleurs, l'organe de retenue peut posséder seulement deux positions, par exemple la position de verrouillage et la position de libre déformation ou la position de déverrouillage et la position de libre déformation. Dans le cas où l'organe de retenue possède trois positions, l'ordre des positions peut être modifié par rapport à celui décrit et la position de verrouillage peut par exemple se trouver entre la position de libre déformation et la position de déverrouillage.

En outre, le moyen d'indexation de l'organe de retenue peut avoir une structure différente de celle décrite : l'ergot peut ainsi être solidaire du manchon tandis que le logement et les lamelles sont ménagés dans le corps.

En variante, les surfaces 27 des pattes 24 peuvent être inclinées de telle manière que lorsque l'organe de retenue 22 est dans la position de libre déformation et que le circuit est mis sous pression après l'insertion du conduit 2, le conduit 2 recule en provoquant le soulèvement des pattes 24 par un effet de came. L'éjection du conduit signale que l'organe de retenue n'a pas été amené dans sa position de verrouillage.

## Revendications

1. Dispositif de raccordement instantané comprenant un corps (5) axialement divisé en une section de liaison (6) à un premier conduit (1) et une section de connexion (7) agencée pour recevoir de façon étanche une extrémité (3) d'un deuxième conduit (2), le corps étant associé à un organe de retenue (22) possédant des pattes (24) élastiquement déformables entre un état d'agrippement d'un redan externe (4) de l'extrémité du deuxième conduit et un état d'échappement du redan, **caractérisé en ce que** l'organe de retenue est monté sur le corps pour pivoter entre une position de libre déformation des pattes entre leurs deux états, et au moins une position de maintien dans laquelle les pattes coopèrent avec une surface (20, 21) qui est solidaire du corps et qui maintient les pattes dans l'un de leurs deux états.

2. Dispositif selon la revendication 1, **caractérisé en ce que**, dans la position de maintien, chaque patte (24) dans son état d'agrippement est au moins partiellement reçue dans un logement du corps (5) dont une surface (20) s'oppose à une déformation de la patte vers son état d'échappement.

3. Dispositif selon la revendication 1, **caractérisé en ce que**, dans la position de maintien, chaque patte (24) coopère avec une rampe (21) du corps (5) soulevant la patte pour amener celle-ci dans son état d'échappement.

4. Dispositif selon la revendication 3, **caractérisé en ce que**, dans la position de libre déformation, l'organe de retenue (22) est agencé pour pouvoir être entraîné axialement par le deuxième conduit (2) vers une position de verrouillage dans laquelle chaque patte (24) dans son état d'agrippement est au moins partiellement reçue dans un logement du corps (5) dont une surface (20) s'oppose à une déformation de la patte vers son état d'échappement.

5. Dispositif selon la revendication 2 et la revendication 3, **caractérisé en ce que** l'organe de retenue (22) possède deux positions de maintien décalées angulairement l'une par rapport à l'autre.

6. Dispositif selon la revendication 5, **caractérisé en ce que** les deux positions de maintien sont situées de part et d'autre de la position de libre déformation.

7. Dispositif selon la revendication 1, **caractérisé en ce que** le corps (5) comprend une surface radiale de butée (18) destinée à coopérer avec une face radiale frontale de l'extrémité libre des pattes (24) lorsque celles-ci sont soumises à un effort de traction.

8. Dispositif selon la revendication 1, **caractérisé en ce qu'**il comprend un moyen d'indexation (28, 29, 30) de l'organe de retenue (22) par rapport au corps (5) au moins pour la position de libre déformation de l'organe de retenue.

9. Dispositif selon la revendication 8, **caractérisé en ce que** le moyen d'indexation comprend au moins une lamelle flexible (30) s'étendant axialement depuis l'organe de retenue (22) ou le corps (5) pour coopérer avec un ergot (28) radialement en saillie du corps ou de l'organe de retenue.

## Claims

1. A quick coupling device comprising a body (5) axially subdivided into a link section (6) for linking to a first duct (1), and a connection section (7) arranged to receive in leaktight manner one end (3) of a second duct (2), the body being associated with a retaining member (22) possessing tabs (24) that are elastically deformable between a state of gripping an outer bead (4) on the end of the second duct, and a state of releasing the bead, the device being **characterized in that** the retaining member is mounted on the body to turn between a free deformation position in which the tabs can deform between their two states, and at least one holding position in which the tabs cooperate with a surface (20, 21) that is secured to the body and that holds the tabs in one of their two states.

2. A device according to claim 1, **characterized in that**, in the holding position, each tab (24) is in its gripping states and is received at least in part in a housing of the body (5) having a surface (20) that opposes deformation of the tab towards its release state.

3. A device according to claim 1, **characterized in that**, in the holding position, each tab (24) cooperates with a ramp (21) of the body (5) lifting the tab so as to bring it into its release state.

4. A device according to claim 3, **characterized in that**, in the free deformation position, the retaining member (22) is arranged to be capable of being driven axially by the second duct (2) towards a locking position in which each tab (24) in its gripping state is received at least in part in a housing of the body (5) having a surface (20) that opposes deformation of the tab towards its release state.

5. A device according to claim 2 and claim 3, **characterized in that** the retaining member (22) possesses two holding positions that are angularly offset relative to each other.

6. A device according to claim 5, **characterized in that** the two holding positions are situated on either side of the free deformation position.

7. A device according to claim 1, **characterized in that** the body (5) has a radial abutment surface (18) for cooperating with a front radial surface at the free end of each tab (24) when the tabs are subjected to a traction force.

8. A device according to claim 1, **characterized in that** it includes indexing means (28, 29, 30) for indexing the retaining member (22) relative to the body (5) at least for the free deformation position of the retaining member.

9. A device according to claim 8, **characterized in that** the indexing means comprises at least one flexible blade (30) extending axially from the retaining member (22) or the body (5) to cooperate with a stud (28) projecting radially from the body or from the retaining member.

## Patentansprüche

1. Schnellverbindungs-Vorrichtung, umfassend ein Gehäuse (5), das axial in einen Verbindungsabschnitt (6) zur Verbindung mit einem ersten Rohr (1) und in einen Anschluss-Abschnitt (7) geteilt ist, der für eine dichte Aufnahme eines Endes (3) eines zweiten Rohrs (2) ausgebildet ist, wobei das Gehäuse mit einem Rückhalteorgan (22) verbunden ist, das Klauen (24) besitzt, die elastisch verformbar sind zwischen einem Zustand des Festhaltens eines äußeren Vorsprungs (4) des Endes des zweiten Rohrs und einem Zustand der Freigabe des Vorsprungs, **dadurch gekennzeichnet, dass** das Rückhalteorgan auf dem Gehäuse so montiert ist, dass es zwischen einer Position einer ungehinderten Deformation der Klauen zwischen ihren beiden Zuständen, und mindestens einer Halteposition verschwenkbar ist, in der die Klauen mit einer Fläche (20, 21) zusammenwirken, die mit dem Gehäuse fest verbunden ist und die die Klauen in einem ihrer beiden Zustände hält.

2. Vorrichtung nach Anspruch 1, **dadurch gekennzeichnet, dass** in der Halteposition jede Klaue (24) in ihrem Festhaltezustand mindestens teilweise in einer Aufnahme des Gehäuses (5) aufgenommen ist, von der eine Fläche (20) einer Deformation der Klaue in Richtung ihres Freigabezustandes entgegenwirkt.

3. Vorrichtung nach Anspruch 1, **dadurch gekennzeichnet, dass** in der Halteposition jede Klaue (24) mit einer Rampe (21) des Gehäuses (5) zusammenwirkt, welche die Klaue anhebt, um diese in ihren Freigabezustand zu bringen.

4. Vorrichtung nach Anspruch 3, **dadurch gekennzeichnet, dass** in der Position einer ungehinderten Deformation das Rückhalteorgan (22) so angeordnet ist, dass es vom zweiten Rohr (2) axial in Richtung einer Verriegelungsposition verschoben werden kann, in der jede Klaue (24) in ihrem Festhaltezustand mindestens teilweise in einer Aufnahme des Gehäuses (5) aufgenommen ist, von der eine Fläche (20) einer Deformation der Klaue in Richtung ihres Freigabezustandes entgegenwirkt.

5. Vorrichtung nach Anspruch 2 und 3, **dadurch gekennzeichnet, dass** das Rückhalteorgan (22) zwei Haltepositionen besitzt, die gegeneinander winkelversetzt sind.

6. Vorrichtung nach Anspruch 5, **dadurch gekennzeichnet, dass** sich die beiden Haltepositionen auf beiden Seiten der Position einer ungehinderten Deformation befinden.

7. Vorrichtung nach Anspruch 1, **dadurch gekennzeichnet, dass** das Gehäuse (5) eine radiale Anschlagfläche (18) umfasst, die dazu bestimmt ist, mit einer radialen Stirnfläche des freien Endes der Klauen (24) zusammenzuwirken, wenn diese einer Zugbeanspruchung unterworfen sind.

8. Vorrichtung nach Anspruch 1, **dadurch gekennzeichnet, dass** sie ein Mittel zur Indexierung (28, 29, 30) des Rückhalteorgans (22) relativ zum Gehäuse (5) mindestens für die Position der ungehinderten Deformation des Rückhalteorgans umfasst.

9. Vorrichtung nach Anspruch 8, **dadurch gekennzeichnet, dass** das Indexierungsmittel mindestens eine flexible Lamelle (30) umfasst, die sich axial vom Rückhalteorgan (22) oder dem Gehäuse (5) erstreckt, um mit einer Nocke (28) zusammenzuwirken, die radial vom Gehäuse oder vom Rückhalteorgan absteht.
